# EUROPEAN PATENT APPLICATION

(11) **EP 4 576 515 A1**
(43) Date of publication of application: **25.06.2025**
(21) Application number: 23307341.0
(22) Date of filing: 22.12.2023
(51) Int. Cl.: H02K 7/14, B64C 13/50

(54) **ROTARY EMA END STOP ASSEMBLY**

(71) Applicant: Goodrich Actuation Systems SAS, 27950 Saint-Marcel (FR)
(72) Inventor: POTIER, Karl, 75014 Paris (FR); DINIS, David, 92800 Puteaux (FR)
(74) Representative: Dehns

(57) **Abstract**

A rotary electromechanical actuator, EMA, comprising a rotary part (100) for rotation about an axis and a fixed part (200a, 200b) relative to which the rotary part rotates; the EMA further comprising: a hard stop assembly comprising one or more hard stop members (300a, 300b) mounted to the EMA fixed part and one or more abutment members (400a, 400b) mounted to the rotary part and arranged to contact the one or more hard stop members at a hard stop end rotary position of the rotary part relative to the fixed part; and a soft stop assembly comprising one or more moving soft stop members (310a, 310b) mounted to the rotary member and one or more stationary soft stop members (320a, 320b) mounted to the fixed part, the one or more moving soft stop members arranged to contact the one or more soft stop members at a soft stop end position of the rotary part relative to the fixed part, wherein the circumferential distance between the moving soft stop members and the stationary soft stop members is less than that between the one or more abutment members and the one or more hard stop members, and wherein the one or more moving soft stop members and the one or more stationary soft stop members have a greater flexibility than the one or more hard stop members

## Description

### TECHNICAL FIELD

The present disclosure relates to an end stop for a rotary electromechanical actuator, EMA.

### BACKGROUND

Actuators find many applications, particularly in controlling movement of a moveable component. In aircraft, many moveable components and surfaces are moved by means of an actuator.

Conventionally, many actuators, particularly in vehicles, aircraft, heavy machinery etc. are hydraulic actuators where components are moved in response to hydraulic or pressurized fluid.

Whilst hydraulic actuators have proven reliable and effective particularly in large load applications, the hydraulic parts of the system add considerably to the overall weight and size of the system. Also, hydraulic systems are subject to leakage and are not particularly clean.

There has, in recent years, been a move to replace hydraulic systems, in many fields, such as in aviation, with electrical or partly electrical systems which have reduced weight and footprint compared to hydraulic systems. With the move towards 'more electric aircraft' (MEA) or 'all electric aircraft' (AEA), for example, there has been a move towards using electromechanical actuators (EMA) to control the movement of movable surfaces and components.

In general, EMAs include an electric motor having an outlet shaft with first and second directions of rotation and a transmission assembly arranged to connect the shaft to the moveable surface.

A rotary EMA has a rotary shaft, driven by a motor, and connected to rotate an output ring via a gear set. The output ring is attached to the surface to be moved, to cause a corresponding rotary movement of the surface about the axis of the output ring. Rotary EMAs have proven useful in e.g. aircraft flight control panels, where the EMA can be mounted along or in the panel hinge.

This invention relates to geared rotary actuators as may be employed in a power train extending between a power drive unit or drive motor and an element whose position is to be moved as, for example, a control surface of an aircraft. Rotary actuation of devices or surfaces e.g. flight control surfaces in an aircraft, requires high torque drive and so typically requires gearing between the electric motor, which is typically high speed, low torque, and the output shaft of the actuator that drives the surface. The gearbox of the rotary EMA means that EMAs have a much higher inertia than hydraulic actuators.

Systems including power trains for actuating, for example, control surfaces on aircraft, and which require geared rotary actuators, typically require high capacity overtravel stops. Such stops prevent system components from moving past positions defining the ends of a path of travel as a result of inertial loading within the system. Typically, such systems have hard stops located at the end of travel of the EMA output ring. This is typically in the form of a hard cylindrical body or beam provided on a fixed part of the system and against which a flange on the output ring abuts as the rotational position of the output ring approaches its end position. Due to the high inertia of EMAs in high power systems, particularly geared rotary EMAs which have a very high equivalent output inertia due to gearbox ratio, the end stops need to be designed to accommodate high speed impact as the output ring reaches its end position. A challenge faced by designers of such systems is to make the end stop sufficiently hard to sustain high impact loads and stiff enough to deform within the stroke range whilst also being soft enough to avoid generating too much load on actuator parts, especially the gearbox.

There is a need for an end stop design that satisfies these needs.

### SUMMARY

According to this disclosure, there is provided a rotary electromechanical actuator, EMA, comprising a rotary part for rotation about an axis and a fixed part relative to which the rotary part rotates; the EMA further comprising: a hard stop assembly comprising one or more hard stop members mounted to the EMA fixed part and one or more abutment members mounted to the rotary part and arranged to contact the one or more hard stop members at a hard stop end rotary position of the rotary part relative to the fixed part; and a soft stop assembly comprising one or more moving soft stop members mounted to the rotary member and one or more stationary soft stop members mounted to the fixed part, the one or more moving soft stop members arranged to contact the one or more soft stop members at a soft stop end position of the rotary part relative to the fixed part, wherein the circumferential distance between the moving soft stop members and the stationary soft stop members is less than that between the one or more abutment members and the one or more hard stop members, and wherein the one or more moving soft stop members and the one or more stationary soft stop members have a greater flexibility than the one or more hard stop members.

In embodiments, the rotary part is an output ring of the EMA and the one or more fixed parts comprises one or more EMA housing parts or earth ring.

In embodiments, the one or more hard stop members comprises a rigid beam.

The one or more abutment members may comprise one or more flanges extending radially outwards from the rotary part.

In embodiments, the one or more moving soft stop members and the one or more stationary soft stop members comprise flexible beams each having a first end fixed to the respective EMA part and a free end, and the free ends of the one or more moving soft stop members contact the free ends of the stationary soft stop members at the soft stop end position.

The free end of the one or more moving soft stop members may extend radially outwards relative to their first end, and the free end of the one or more stationary soft stop members may extend radially inwards relative to their first end.

In embodiments, the one or more moving soft stop members and the one or more stationary soft stop members each have a chamfer at a point where they contact at the soft stop end position.

Embodiments are provided having two moving soft stop members and two stationary soft stop members.

Embodiments are provided having a first hard stop member at a first hard stop end position in a first direction of rotation of the rotary member and a second hard stop member at a second hard stop end position in a second direction of rotation of the rotary member.

### BRIEF DESCRIPTION

Examples of the end stop arrangement according to the disclosure will now be described with reference to the drawings. It should be noted that these are examples only, and variations are possible within the scope of the claims.
Figure 1 shows a conventional rotary EMA with a hard end stop, for the purposes of explanation.
Figure 2 is a 3D view of a rotary EMA incorporating a hybrid end stop assembly according to the disclosure.
Figure 3 is a sectional view of a rotary EMA such as shown in Fig. 2.
Figure 4 is a close up view of part of the stop assembly of Fig. 2.
Figure 5 is provided to explain operation of an end stop assembly according to the disclosure.

### DETAILED DESCRIPTION

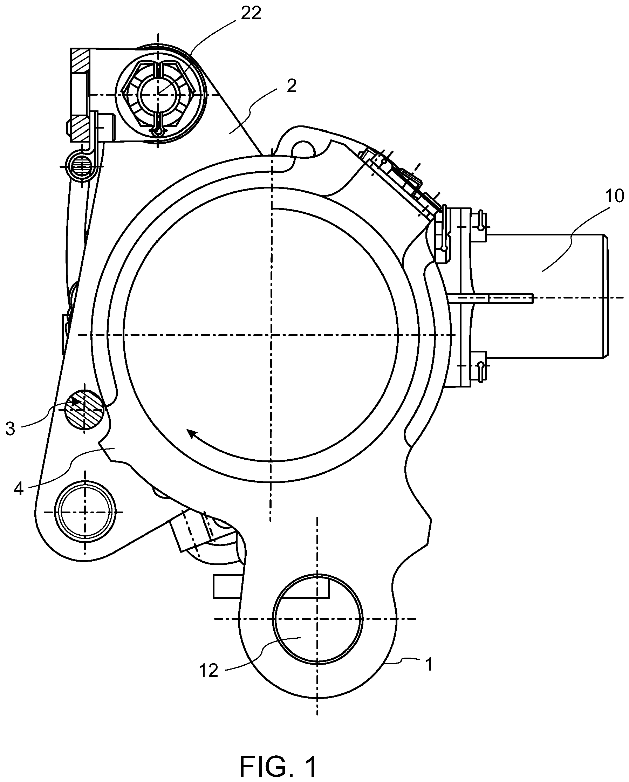

Figure 1 shows an example of a known rotary EMA having a rotary part or output ring 1, which attaches, in use, to a moveable part that is to be moved by the EMA e.g. an aircraft wing panel, and a relatively fixed part 2 which attaches to a relatively stationary part with respect to which the moveable part is moved by the EMA. In the example, the output ring 1 would be attached to the moveable part/surface etc. at an attachment point 12, which the relatively fixed part 2 of the EMA would be attached to the relatively stationary part at a further attachment point 22. The rotary EMA includes a shaft 10 rotation of which causes, via a gearbox (not shown here), rotation of the output ring 1 about an axis and relative to the fixed part and, therefore, causing movement of the moveable part relative to the stationary part. To prevent overtravel or over-rotation of the output ring 1, an end stop 3 is mounted to the fixed part 1 at a position such that a flange 4 on the output ring 1 abuts against the stop at the end of stroke of the output ring to prevent further rotation of the output ring. This arrangement is known in the actuator art and will not be described in further detail.

As mentioned above, rotary EMAs have a high inertia e.g. >10 kg.m² resulting in the output ring abutting the stop at a high impact speed which gives rise to the conflicting requirements mentioned above. Whilst the outcome can be varied by varying the diameter of the hard end stop, it has not been possible to design an end stop that is satisfactory in terms of stiffness, generated torque and generated stress/damage to the gearbox or other components. Torque is generated on impact with the end stop. A limit torque is the maximum torque, which is used to size the gearbox. Up to this limit, the gearbox will suffer no permanent deformations. Whilst a relatively smaller end stop diameter e.g. 10 mm may generate a torque on impact with the stop, that is less than the torque limit and so will not cause damage to the gearbox, the stress on the relatively small end stop will be higher than its yield strength and so can cause damage to the end stop. Conversely, by increasing the diameter of the end stop (e.g. to 18 mm) to ensure that the stress on the end stop does not exceed its yield strength, the generated torque increases to beyond the torque limit which can result in damage to the gearbox. It has not, to date, been possible to achieve an acceptable balance between generated torque and end stop stress based on the diameter of the hard end stop.

The solution to these challenges, provided by this disclosure, is to provide a hybrid end stop assembly combining flexible soft end stops positioned rotationally ahead of the conventional hard end stops such that the output ring contacts the soft ends stops first e.g. at the end of its functional stroke, then contacts the hard end stops after having been damped by the soft end stop contact, e.g. at the end of its mechanical stroke.

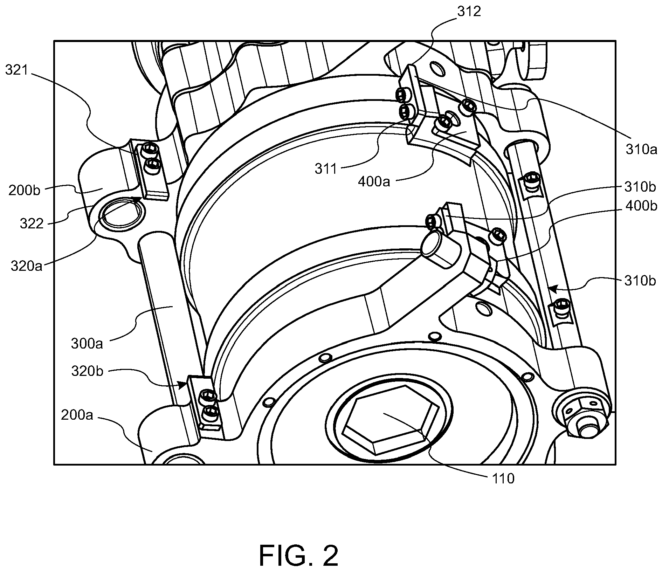

An example of this solution will be described with reference to Figs. 2 to 5.

Fig. 2 shows a rotary EMA having a rotary part in the form of an output ring 100 that is rotated by the actuator shaft 110 relative to a relatively fixed EMA part 200. In this case, the relatively fixed part comprises an earth ring or housing ring 200a, 200b on either end of the output ring 100 although other relatively fixed EMA housing structures may also be possible.

As with the conventional rotary EMA described above, the EMA is provided with a hard stop 300a, 300b mounted to the EMA fixed part 200a, 200b at a position defining the end of rotary stroke of the output ring 100. In this case, there are two end stops 300a, 300b defining each of two opposite rotational end points for the output ring, to prevent over-rotation in both directions of rotation. In other examples, a single hard end stop may suffice. A flange 400a, 400b is provided on the output ring 100 extending radially outwards and at a position such that it abuts the hard end stop at the end of the output ring stroke to stop further rotation. In this example, two flanges 400a, 400b are provided, one adjacent each end of the output ring. In other examples, a single flange may suffice.

In addition, to provide an end stop damping effect, a soft stop assembly is provided to absorb some of the impact from the rotating output ring and slow it down before the flanges abut the hard stop. The soft stop assembly comprises one or more moving flexible soft stop members 310a, 310b attached to the output ring e.g. on or adjacent the flange(s) and a corresponding one or more stationary flexible soft stop members 320a, 320b attached to the EMA fixed part(s). Having an even number of such members can be useful to balance the loads on the gearbox. In the example shown, a moving soft stop part is mounted to each flange on the output ring and a stationary soft stop part is mounted to each earth ring 200a, 200b. The moving and stationary soft stop members are positioned such that on rotation of the output ring relative to the EMA fixed part, the moving soft stop members contact the stationary soft stop members at a rotational position of the ring before the mechanical end of stroke position at which the output ring flanges abut the hard stop.

The moving soft stop members 310a, 310b and the stationary soft stop members 320 may be in the form of flexure tabs or beams (which may also be referred to as blades) having a first end 311, 321 secured to the relevant EMA part and a free opposing end 312, 322 that is able to flex relative to the secured end. For example, the moving soft stop members may be secured to the output ring with their free end radially outwards of their first end, while the stationary soft stop members are secured to the fixed parts with their free end radially inwards from their secured ends. The size and location of the soft stop members are such that at the rotational position of the output ring where the moving soft stop members contact the stationary soft stop members, they make contact at their free ends to cause the soft stop members to flex. The circumferential distance between the moving soft stop members and the stationary soft stop members is less than that between the flanges and the hard stop. For example, the moveable soft stop members 310a, 310b may be circumferentially spaced (in the direction towards the stationary soft stop members) closer to the stationary soft stop members 320a, 320b than the flanges are.

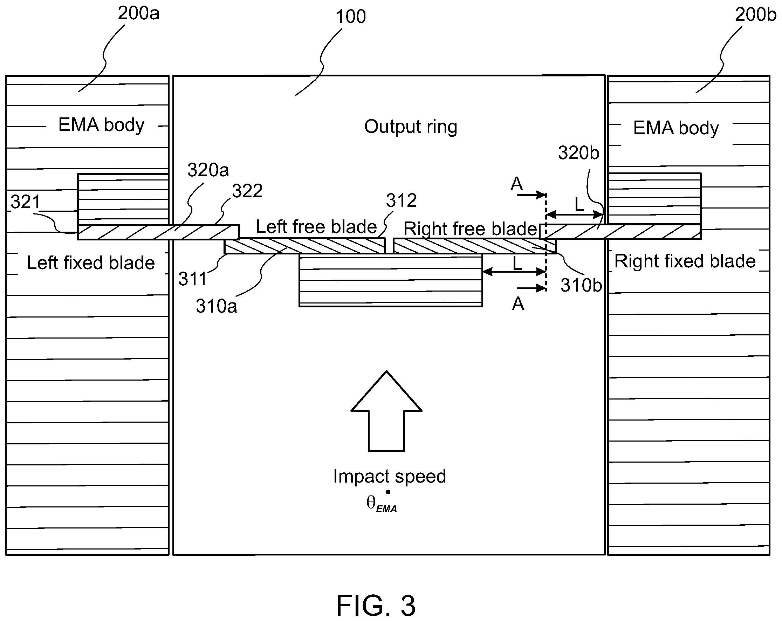

As the output ring 100 rotates relative to the fixed EMA part 200a, 200b, a rotational position is reached at which the moving soft stop members contact, at their free ends, the free ends of the stationary soft stop members as can be seen in Fig. 3 and the contact causes the rotation of the output ring to slow. The output ring may then continue to rotate to the end of its mechanical stroke, but at a lower speed such that the impact with the subsequent hard stop is reduced.

The maximum deflection of the soft stops can be defined by setting appropriate length, width, thickness and/or stiffness of material, taking into account the system inertia, such that at the maximum deflection, the output ring contacts the hard stop. The presence of the hard stop prevents excessive deformation of the soft stop members and also ensures actuator integrity in the event that the impact speed is actually higher than expected.

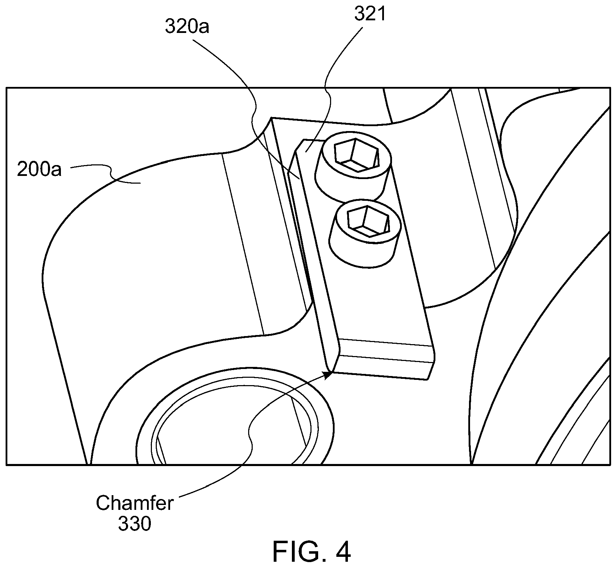

An example of a soft stop member is shown in close-up in Fig. 4. This example shows a stationary soft stop member, but other soft stop members may have the same or a similar design.

Figure 4 shows a soft stop member 320a attached, at one end 321, to a fixed EMA part 200a, which its free end 322 extending radially inwards at a position to make contact with a corresponding moving soft stop on the output ring as the output ring rotates to the soft stop end position.

To allow for mechanical rigging or adjustment of the soft end stop position, the free end of the soft stop members may be provided with a chamfer 330. This may be a relatively small chamfer e.g. 10 deg.

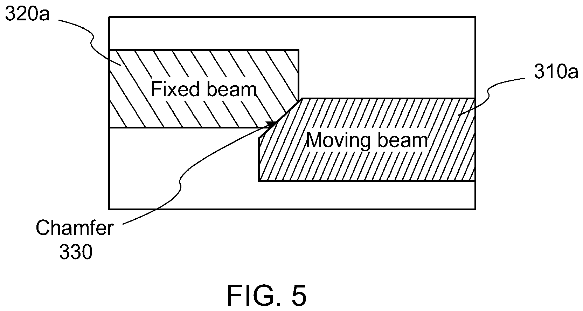

As seen in Fig. 5, the moving and stationary stops are arranged such that when their free ends come into contact, their chamfers 330 engage. The chamfer avoids stress concentration on the ends of the soft stop members. Mechanical rigging is also enabled by first fixing one of the soft stop members in position and then moving the other into position so that the chamfers engage. The chamfer angle should be large enough to reduce stress concentration and ease mechanical rigging, but, at the same time, shall be low enough to not generate high axial loads on impact (which could push the soft stop members laterally).

This solution has been found to provide both a generated torque and an end stop stress within acceptable limits for the EMA and the end stops. The hard stop is able to sustain static loads but not dynamic loads. The addition of the soft stop, to form the hybrid stop, also allows dynamic loads to be sustained.

## Claims

1. A rotary electromechanical actuator, EMA, comprising a rotary part (100) for rotation about an axis and a fixed part (200a, 200b) relative to which the rotary part rotates; the EMA further comprising:
a hard stop assembly comprising one or more hard stop members (300a, 300b) mounted to the EMA fixed part and one or more abutment members (400a, 400b) mounted to the rotary part and arranged to contact the one or more hard stop members at a hard stop end rotary position of the rotary part relative to the fixed part; and
a soft stop assembly comprising one or more moving soft stop members (310a, 310b) mounted to the rotary member and one or more stationary soft stop members (320a, 320b) mounted to the fixed part, the one or more moving soft stop members arranged to contact the one or more soft stop members at a soft stop end position of the rotary part relative to the fixed part, wherein the circumferential distance between the moving soft stop members and the stationary soft stop members is less than that between the one or more abutment members and the one or more hard stop members, and wherein the one or more moving soft stop members and the one or more stationary soft stop members have a greater flexibility than the one or more hard stop members.

2. The EMA of claim 1, wherein the rotary part is an output ring (100) of the EMA and the one or more fixed parts comprises one or more EMA housing parts or earth rings (200a, 200b).

3. The EMA of claim 1 or 2, wherein the one or more hard stop members comprises a rigid beam.

4. The EMA of any preceding claim, wherein the one or more abutment members comprise one or more flanges extending radially outwards from the rotary part.

5. The EMA of any preceding claim wherein the one or more moving soft stop members and the one or more stationary soft stop members comprise flexible beams each having a first end (311, 321) fixed to the respective EMA part and a free end (312, 322), and wherein the free ends of the one or more moving soft stop members contact the free ends of the stationary soft stop members at the soft stop end position.

6. The EMA of claim 5, wherein the free end of the one or more moving soft stop members extend radially outwards relative to their first end, and wherein the free end of the one or more stationary soft stop members extend radially inwards relative to their first end.

7. The EMA of claim 5 or 6 when dependent on claim 4, wherein the one or more moving soft stop members are attached to respective ones of the one or more flanges.

8. The EMA of any preceding claim, wherein the one or more moving soft stop members and the one or more stationary soft stop members each have a chamfer (330) at a point where they contact at the soft stop end position.

9. The EMA of any preceding claim, having two moving soft stop members and two stationary soft stop members.

10. The EMA of any preceding claim having a first hard stop member at a first hard stop end position in a first direction of rotation of the rotary member and a second hard stop member at a second hard stop end position in a second direction of rotation of the rotary member.

11. The EMA of any preceding claim, further comprising a drive shaft engaged to rotate the rotary part relative to the fixed part.

12. The EMA of any preceding claim, further comprising a gearbox in engagement with the rotary part for geared rotation of the rotary part relative to a rotary input to the EMA.

13. The EMA of any preceding claim for actuation of a moveable aircraft surface.

14. The EMA of claim 13, for actuation of an aircraft spoiler.
